# EUROPÄISCHE PATENTSCHRIFT

(11) **EP 2 702 385 B1**
(45) Veröffentlichungstag und Bekanntmachung des Hinweises auf die Patenterteilung: **17.10.2018**
(21) Anmeldenummer: 12717734.3
(22) Anmeldetag: 29.04.2012
(51) Int. Cl.: G01N 1/28, G01N 35/02

(54) **STANZVORRICHTUNG MIT BELEUCHTETER AUFNAHMEPLATTE**
PUNCHING DEVICE WITH ILLUMINATED RECEIVING PLATE
DISPOSITIF DE POINÇONNAGE POURVU D'UNE PLAQUE DE RÉCEPTION ÉCLAIRÉE

(30) Priorität: 29.04.2011 DE 102011075039
(43) Veröffentlichungstag der Anmeldung: 05.03.2014
(73) Patentinhaber: Hamilton Bonaduz AG, 7402 Bonaduz (CH)
(72) Erfinder: GIOVANOLI, Nando, CH-7457 Bivio (CH); MENZI, Reto, CH-8757 Filzbach (CH)
(74) Vertreter: Müller Hoffmann & Partner
(86) Internationale Anmeldenummer: PCT/EP2012/057874
(87) Internationale Veröffentlichungsnummer: WO 2012/146772

(56) Entgegenhaltungen:
- EP-A1- 0 012 698
- EP-A2- 0 753 747
- EP-A2- 0 895 088
- WO-A1-2005/093433
- WO-A1-2006/056658
- WO-A2-2006/116356
- WO-A2-2009/126303
- DE-A1- 19 930 607
- JP-A- S5 819 540
- JP-A- 2010 139 357
- US-A- 5 641 682
- US-A1- 2003 127 609
- US-A1- 2011 034 343

## Beschreibung

Die vorliegende Erfindung betrifft eine Stanzvorrichtung zum Verarbeiten von getrockneten auf einer Probenkarte aufgetragenen Proben, insbesondere von DNA enthaltenden Flüssigkeiten wie Blut, Speichel und dergleichen.

Bei derartigen Stanzvorrichtungen werden in einem Magazin für Probenkarten mehrere Probenkarten aufbewahrt und in einer bestimmten Reihenfolge mittels einer Greifeinheit aus dem Magazin entnommen und einem Stanzmittel der Stanzvorrichtung zugeführt. In einem zuvor mittels bildgebender Verfahren erfassten Bereich, in dem auf der Probenkarte die aufgetragene Probe ermittelt worden ist, erfolgt dann das Ausstanzen von wenigstens einem Probenstück aus der Probenkarte. Es können aus dem gleichen Probenbereich auch mehrere Probenstücke gleichzeitig oder nacheinander ausgestanzt werden. Die ausgestanzten Probenstücke werden durch Bewegung eines Stanzstifts (Stempel) durch eine Austrittsöffnung in einem Unterwerkzeug hindurch geführt und auf diese Weise in eine Aufnahmevertiefung in einem Aufnahmebehälter, vorzugsweise in einen Napf einer Mikrotiterplatte, transportiert. Sobald aus allen gewünschten Probekarten Probenstücke ausgestanzt und im Aufnahmebehälter aufgenommen worden sind, kann die Analyse der einzelnen in den Probenstücken enthaltenen Proben mittels Verfahren wie etwa PCR für DNA-Analysen, Hochdruck-Gaschromatografie (HPLC) oder ähnliches erfolgen, wobei hierzu nach dem Ausstanzen weitere Schritte durchgeführt werden, die im Rahmen der vorliegenden Anmeldung nicht detailliert beschrieben werden.

Ein Verfahren und eine Vorrichtung zum automatisierten Ausstanzen von Probenstücken aus Probenkarten ist beispielsweise aus der US 5,641,682 bekannt.

Ferner ist unter der Bezeichnung "BSD1000-GenePunch" eine Stanzvorrichtung der genannten Art der Firma BSD Robotics (a Luminex Company, in Brisbane, Queensland 4110, Australia) bekannt. Ein zugehöriger Produktflyer war zum Anmeldezeitpunkt der vorliegenden Anmeldung unter der folgenden Internetadresse verfügbar: http://www.bsdrobotics.com/Documents/Brochure/BSDR1000(10)%20-%20BSD1000%20-GenePunch.PDF.

Ferner ist die Funktionsweise dieser Stanzvorrichtung in einem Videofilm offenbart, der zum Anmeldezeitpunkt unter der folgenden Internetadresse verfügbar war: http://www.bsdrobotics.com/Videos/BSD1000.wmv.

Aus dem Videofilm ist folgende Funktionsweise ersichtlich: Bei der Stanzvorrichtung "BS-D1000-GenePunch" wird eine Greifvorrichtung für Probenkarten von einem Magazin, aus dem die Greifvorrichtung eine Probenkarte entnommen hat, entlang einer horizontal verlaufenden Schiene zu einem Scanner bewegt, in den die Probenkarte eingeführt und anschließend gescannt wird. Die Greifvorrichtung ist dabei in zwei zueinander orthogonalen Richtungen beweglich, nämlich entlang der Schiene und orthogonal zu dieser, derart, dass die ergriffene Probenkarte in ihrer Kartenebene zweidimensional verschiebbar ist. Nach dem Scannen wird die Probenkarte mittels der Greifvorrichtung zum Stanzmittel der Stanzvorrichtung transportiert und relativ zu diesem positioniert, damit ein Probenstück an der nach dem Scannen ausgewerteten Position der Probenkarte ausgestanzt werden kann. Das ausgestanzte Probenstück wird anschließend in einen unter dem Stanzmittel angeordneten Aufnahmenbehälter, wie etwa einen Napf einer Mikrotiterplatte, abgegeben. Bei dieser Stanzvorrichtung sind mehrere Aufnahmebehälter sternförmig um eine zu einer horizontalen Ebene orthogonalen Drehachse angeordnet und ihre Position, insbesondere eines bestimmten Napfs, relativ zum Stanzmittel erfolgt mittels einer Drehbewegung und mittels Verschiebung in der Horizontalebene. Nachdem das Ausstanzen von einem oder mehreren Probenstücken aus einer Probenkarte abgeschlossen ist, transportiert die Greifvorrichtung die gestanzte Probenkarte entlang der Schiene zurück zum Kartenmagazin und legt diese dort wieder ab. Die Greifvorrichtung wird dann kurz zurückgezogen, bis das Kartenmagazin um eine Position nach oben verfahren worden ist, um die nächste Probenkarte aus dem Magazin entnehmen zu können.

Eine aus dem Stand der Technik bekannte Stanzvorrichtung (siehe z.B US5641682 A) umfasst also in allge meinen Worten wenigstens ein Stanzmittel mit einem Stempel und einem Unterwerkzeug, wobei der Stempel zwischen einer vom Unterwerkzeug entfernten Ruhestellung und einer dem Unterwerkzeug angenäherten Stanzstellung beweglich ist, und wobei das Stanzmittel eine Aufnahmeöffnung aufweist, in welche eine Probenkarte mittels einer beweglichen Greifeinheit der Stanzvorrichtung einführbar und relativ zum Stanzmittel positionierbar ist, und einen mit dem Stempel des Stanzmittels koppelbaren oder gekoppelten Stanzantrieb, durch den die Bewegung des Stempels zwischen Ruhestellung und Stanzstellung angetrieben wird, wobei das Stanzmittel derart eingerichtet ist, dass ein aus der Probenkarte ausgestanztes Probenstück an einer Austrittsöffnung des Unterwerkzeugs in eine Aufnahmevertiefung eines unterhalb des Stanzmittels angeordneten Aufnahmebehälters abgegeben werden kann.

Die bekannten Stanzvorrichtungen ermöglichen zwar ein Scannen und Analysieren der Probenkarte vor dem Ausstanzen von Probenstücken, aber es sind keine Möglichkeiten zur Überprüfung von Ergebnissen des Stanzvorgangs gegeben, wie etwa die Überprüfung, ob in den gewünschten Aufnahmevertiefungen des Aufnahmebehälters auch tatsächlich ein Probenstück angekommen bzw. aufgenommen ist.

JPS5819540 A zeigt zwar eine unterhalb einer Mikroplatte angeordnete Lichtquelle. Allerdings ist oberhalb der Mikroplatte lediglich ein Photometer angeordnet mit photoelektrischen Elementen.

JP2010139357 A zeigt eine CCD-Kamera, die oberhalb einer Mutterplatte mit Düsenlöchern angeordnet ist. Unterhalb der Mutterplatte ist eine Lichtquelle angeordnet, welche durch die Düsenlöcher strahlen kann. Mittels dieser Anordnung kann durch Bilderkennung das Vorhandensein von Fremdmaterial in Düsenlöchern erfasst werden.

Aufgabe der Erfindung ist es daher, die Möglichkeiten der Überprüfung des Stanzvorgangs zu verbessern.

Hierzu wird gemäß Anspruch 1 vorgeschlagen, dass die Stanzvorrichtung eine Aufnahmebehälter abstützende Aufnahmeplatte mit einer wenigstens einen Teil der Aufnahmeplatte beleuchtenden Lichtquelle aufweist, wobei die Lichtquelle derart angeordnet ist, dass wenigstens ein Teil eines auf der Aufnahmeplatte befindlichen Aufnahmebehälters, insbesondere von in ihm vorgesehen Aufnahmevertiefungen, aus Richtung der Aufnahmeplatte, von unten beleuchtet werden kann.

Eine derartige Anordnung der Lichtquelle ermöglicht ein Hinterleuchten des Aufnahmebehälters, so dass von der Lichtquelle ausgestrahltes Licht durch den Aufnahmebehälter hindurchtritt. Wird in einem solchen Fall von oben auf den Aufnahmebehälter geschaut, können die einzelnen Aufnahmevertiefungen, insbesondere Näpfe/Wells eine Mikrotiterplatte, erkannt werden und ferner zeichnen sich in den Aufnahmevertiefungen enthaltene Probenstücke als dunklere Flecken ab, da sie das ausgestrahlte Licht abdecken. Auf diese Weise ist es möglich festzustellen, ob in gewünschten Aufnahmevertiefungen auch Probenstücke enthalten sind. Da die Lichtquelle in der Aufnahmeplatte vorgesehen bzw. integriert ist, kann eine solche Überprüfung in einfacher Weise, ggf. nach jedem einzelnen Stanzen erfolgen, da der Aufnahmebehälter zwecks Hinterleuchtung nur über der Lichtquelle positioniert werden muss, die sich in geringem Abstand zum Stanzmittel befindet, unter welchem der Aufnahmebehälter beim Stanzvorgang positioniert ist.

Bevorzugt ist es, dass als Lichtquelle wenigstens eine Elektrolumineszenz-Folie an der Aufnahmeplatte vorgesehen ist. Eine solche EL-Folie lässt sich platzsparend an der Aufnahmeplatte anbringen und einen bestimmten flächigen Bereich optimal ausleuchten. Ferner kann eine EL-Folie ausgewählt werden, die ein Licht einer bestimmten Farbe ausstrahlt, wobei die Farbe im Hinblick auf die durchzuführenden Bildverarbeitungsschritte bei der Analyse gewählt werden kann.

Vorzugsweise ist die Aufnahmeplatte eine transparente Platte, vorzugsweise Glasplatte, wobei die EL-Folie vorzugsweise an der Unterseite der Aufnahmeplatte angeordnet ist. Die Anordnung der EL-Folie unterhalb der Glasplatte bzw. an deren vom Aufnahmebehälter abgewandten Seite ermöglicht eine nach oben hin vollständig glatte Oberfläche, auf welcher der Aufnahmebehälter relativ zur Aufnahmeplatte gleitend verschoben werden kann.

Weiterbildend wird vorgeschlagen, dass die Stanzvorrichtung eine Bilderfassungsvorrichtung umfasst, die derart angeordnet ist, dass ein von ihr wenigstens teilweise zu erfassender Gegenstand, insbesondere ein auf der Aufnahmeplatte befindlicher Aufnahmebehälter bzw. in ihm vorgesehene Aufnahmevertiefungen, zwischen der Bildebene der Bilderfassungsvorrichtung und der Lichtquelle angeordnet werden kann, derart, dass die Lichtquelle von der Bilderfassungsebene aus gesehen hinter dem zu erfassenden Gegenstand liegt. Als zu erfassender Gegenstand kann auch eine Probenkarte in Frage kommen, beispielsweise um zu überprüfen, ob die Probenkarte an der richtigen Stelle getanzt worden ist. Dabei tritt von der EL-Folie ausgestrahltes Licht durch ein beim Stanzen entstandenes Loch hindurch, was von oben, insbesondere von der Bilderfassungsvorrichtung aus gesehen als Punkt in der Farbe der EL-Folie identifizierbar ist.

Um die Aufnahmebehälter auf der Aufnahmeplatte bewegen zu können, wird vorgeschlagen, dass die Stanzvorrichtung einen auf der Aufnahmeplatte aufliegenden, in der Plattenebene beweglichen Transportrahmen aufweist, in welchem wenigstens ein Aufnahmebehälter aufnehmbar ist.

Es ist ferner bevorzugt, dass die Aufnahmeplatte eine Abdeckung eines Gehäuses für eine Antriebseinheit bildet, welche die Bewegung des Transportrahmens auf der Aufnahmeplatte ermöglicht. Die Antriebseinheit kann dabei durch die Aufnahmeplatte vor Staubpartikeln geschützt werden, die beim Stanzen entstehen.

Der Transportrahmen ist vorzugsweise berührungslos mittels Magneten mit der durch die Aufnahmeplatte abgedeckten Antriebseinheit gekoppelt.

Die magnetische Kopplung zwischen der Antriebseinheit und dem Transportrahmen ermöglicht eine ausreichend genaue Positionierung des Transportrahmens bzw. eines darin aufgenommenen Aufnahmebehälters relativ zum Stanzmittel bzw. zur Bilderfassungsvorrichtung und der EL-Folie. Vorzugsweise ist der Transportrahmen an mehreren Stellen über einzelne Magneten mit der Antriebseinheit gekoppelt, so dass die relative Verschiebung zwischen Antriebseinheit und Transportrahmen möglichst gering gehalten werden kann, um grobe Fehler in der Positionierung des Transportrahmens zu verhindern.
Es ist bevorzugt, dass die Greifeinheit ein Probenkartengreifmittel und ein weiteres Greifmittel für Aufnahmebehälter umfasst, wobei mittels der Greifeinheit Aufnahmebehälter von Wartepositionen außerhalb der Aufnahmeplatte zu Verarbeitungspositionen auf der Aufnahmeplatte und umgekehrt transportierbar sind.
Dabei kann die Greifeinheit derart ausgeführt sein, dass Aufnahmebehälter mittels der Greifeinheit zum Transportrahmen hin und von diesem weg bewegt werden können.

Ferner wird zur Lösung der Aufgabe ein Verfahren gemäß Anspruch 9 zum Auswerten von wenigstens einem Ergebnis eines Stanzvorgangs mittels einer Stanzvorrichtung mit einem der oben beschriebenen Merkmale vorgeschlagen, wobei das Verfahren die folgenden Schritte umfasst:
Ausstanzen von wenigstens einem Probenstück aus wenigstens einer Probenkarte mittels eines Stanzmittels,
Aufnehmen des wenigstens einen Probenstücks in einem Aufnahmebehälter, insbesondere in einer Aufnahmevertiefung des Aufnahmebehälters,
Beleuchten des Aufnahmebehälters oder der gestanzten Probenkarte mittels einer Lichtquelle,
Erfassen eines Bildes des Aufnahmebehälters oder der gestanzten Probenkarte mittels einer Bilderfassungsvorrichtung, wobei der Aufnahmebehälter oder die gestanzte Probenkarte zwischen der Lichtquelle und einer Bilderfassungsebene der Bildaufnahmevorrichtung angeordnet wird, derart, dass Licht von der Lichtquelle, das die Bilderfassungsvorrichtung erreicht, durch durchscheinende Abschnitte des Aufnahmebehälters oder durch ausgestanzte Öffnungen (42) der Probenkarte hindurchtritt.
Für das Verfahren wird ferner vorgeschlagen, dass ein von der Bilderfassungsvorrichtung erfasstes Bild dahingehend ausgewertet wird, an welchen Stellen des Bildes Licht von der Lichtquelle hindurchtritt oder abgedeckt wird.
In einem Bild des Aufnahmebehälters wird bevorzugt ausgewertet, ob in wenigstens einer Aufnahmevertiefung des Aufnahmebehälters wenigstens ein aus einer Probenkarte ausgestanztes Probenstück enthalten ist, welches das Hindurchtreten von Licht der Lichtquelle wenigstens teilweise verhindert. Probenstücke in Aufnahmevertiefungen decken die darunter angeordnete Lichtquelle ab, so dass sie zur Bildebene hin als dunklere, nicht beleuchtete Bereiche wahrgenommen werden können. Dabei ist es unerheblich, ob ein ausgestanztes Probenstück zentral in einer Aufnahmevertiefung oder eher in der Nähe eines Randes der Aufnahmevertiefung liegt, da jedes Probenstück im Prinzip unabhängig von seine Lage und Ausrichtung innerhalb der Aufnahmevertiefung einen vom übrigen Hintergrund abgesetzten dunkleren Bereich bildet.

In einem Bild der Probenkarte wird vorzugsweise ausgewertet, an welchen Stellen der Probenkarte ausgestanzte Öffnungen vorhanden sind, durch welche das Licht der Lichtquelle hindurchtritt. Hierdurch kann beispielsweise festgestellt werden, ob an der zuvor bestimmten Stelle der Probenkarte tatsächlich ein Stanzloch vorhanden ist. Ferner kann grundsätzlich überprüft werden, ob eine Probenkarte bereit ein oder mehrere Stanzlöcher aufweist. Dies könnte beispielsweise dann relevant sein, wenn aus einer Probenkarte in mehreren Zyklen an unterschiedlichen Stellen Probenstücke ausgestanzt werden sollen, die unterschiedlichen Aufnahmebehältern zugeordnet werden sollen, um von den gleichen Proben mehrere unabhängige Analysen zu bekommen.

Ferner ist es bevorzugt, dass die Lichtquelle Licht im sichtbaren Wellenbereich ausstrahlt, insbesondere mit einer Wellenlänge, die einer gewünschten Farbe, wie etwa blau, grün, rot oder dergleichen entspricht.

Das Ergebnis einer Auswertung eines erfassten Bildes kann vorzugsweise mit bereits bekannten Vergleichswerten verglichen werden, um den korrekten Verlauf des Stanzvorgangs zu überprüfen, wobei vorzugsweise überprüft wird, ob ein zuvor ausgestanztes Probenstück in einer vorbestimmten Aufnahmevertiefung enthalten ist oder/und vorzugsweise bestimmt wird, ob das Ausstanzen an einer zuvor bestimmten Stelle der Probenkarte erfolgt ist.

Die Erfindung wird nachfolgend beispielhaft und nicht einschränkend unter Bezugnahme auf die anliegenden Figuren beschrieben.
- Fig. 1: zeigt in einer schematischen Perspektivdarstellung eine Stanzvorrichtung in Kombination mit einer Dosiervorrichtung.
- Fig. 2: zeigt in schematischer Perspektivdarstellung die Stanzvorrichtung ohne Dosiervorrichtung und ohne Greifeinheit
- Fig. 3: zeigt in den Teilfiguren a) und b) schematisch dargestellte Probenkarten im Zustand vor dem Ausstanzen von Probenstücken (Fig. 3a) und nach dem Ausstanzen (Fig. 3b).
- Fig. 4: zeigt in den Teilfiguren a) und b) perspektivische Ansichten der Stanzvorrichtung, wobei in der Teilfigur b) Aufnahmebehälter im Bereich einer Lichtquelle angeordnet sind.
- Fig.5: zeigt eine Schnittdarstellung entsprechend der Schnittlinie V-V der Fig. 4a eines Gehäuses und einer darin untergebrachten Antriebseinheit für die Bewegung von Aufnahmebehältern auf einer das Gehäuse abdeckenden Aufnahmeplatte.
- Fig. 6: zeigt eine Schnittdarstellung entsprechend der Schnittlinie VI-VI der Fig. 4b des Gehäuses und der darin untergebrachten Antriebseinheit für die Bewegung von Aufnahmebehältern auf der Aufnahmeplatte.
- Fig. 7: zeigt eine Vergrößerung des in Fig. 6 mit einem gestrichelten Rechteck markierten Bereichs VII.
- Fig. 8: zeigt in schematischer und stark vereinfachter Darstellung eine Draufsicht auf einen von einer Lichtquelle hinterleuchteten Aufnahmebehälter und für eine Analyseverfahren mögliche Auswertebereiche.

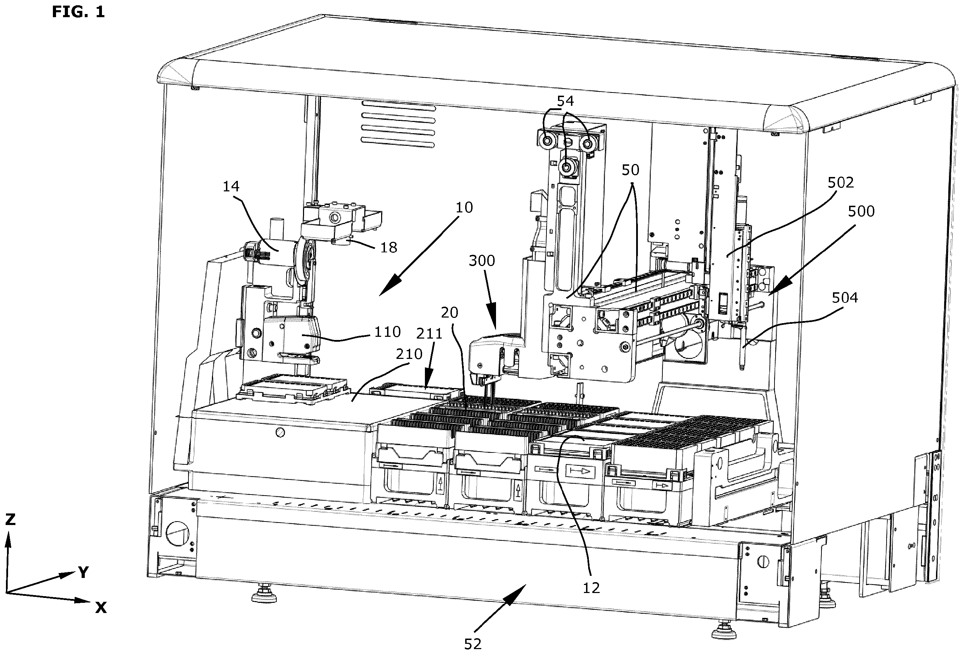

Fig. 1 zeigt eine Gesamtansicht einer Stanzvorrichtung 10, die hier in einer optionalen Weise mit einer Dosiervorrichtung 500 kombiniert ist. In der hier dargestellten Kombination nutzen die Stanzvorrichtung 10 und die Dosiervorrichtung 500 einen gemeinsamen Träger 50, der in einer der Hauptrichtungen X, Y, Z, nämlich in Längsrichtung X beweglich ist. Hierzu ist der Träger 50 im oberen Bereich einer für die Gesamtvorrichtung bereitgestellten, hier aber nur teilweise dargestellten Tragkonstruktion 52 mittels Rollen 54 an nicht dargestellten Längsschienen gelagert. Selbstverständlich ist auch eine nicht dargestellte Antriebsvorrichtung für den Träger 50 vorhanden, die über eine ebenfalls nicht dargestellte Steuereinheit der Gesamtvorrichtung ansteuerbar ist.

Die Dosiervorrichtung umfasst eine am Träger 50 in die beiden anderen Hauptrichtungen Y, Z, also die Querrichtung Y und Höhenrichtung Z, beweglich angebrachte Pipettiervorrichtung 502 mit wenigstens einem Pipettierkanal 504 zum Aspirieren und Dispensieren von Flüssigkeit in/aus bereitgestellten Aufnahmebehältern 12 bzw. einem Reservoir für die zu dosierende Flüssigkeit. Die Dosiervorrichtung 500 ist wie ein ansich bekannter Pipettierautomat ausgeführt und und soll hier nicht weiter im Detail beschrieben werden.

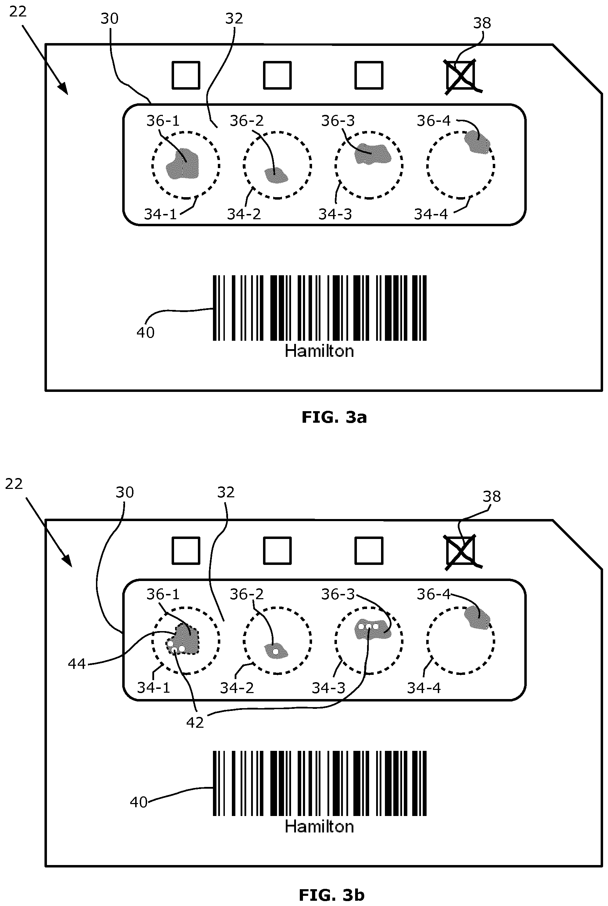

Auf der der Pipettiervorrichtung 502 gegenüberliegenden Seite des Trägers 50 ist eine Greifeinheit 300 angebracht, die ebenfalls beweglich in den beiden anderen Hauptrichtungen Y, Z ausgeführt ist. Diese Greifeinheit 300 ist im Rahmen dieser Anmeldung als zur Stanzvorrichtung 10 zugehörig anzusehen, auch wenn sie im vorliegenden Beispiel an einem gemeinsam mit der Pipettiervorrichtung 502 genutzten Träger 50 angebracht ist. Ferner umfasst die Stanzvorrichtung 10 als weitere Hauptkomponenten einen Stanzantrieb 14, ein Stanzmittel 110, eine Bildaufnahmevorrichtung 18 und eine Aufnahmeplatte 210. Ferner sind aus der Fig. 1 Magazine 20 für jeweils mehrere Probenkarten 22 (Fig. 3) ersichtlich. Mittels der Greifeinheit 300 wird eine Probenkarte aus einem Magazin 20 entnommen und dem Stanzmittel 110 zugeführt, so dass mittels des Stanzmittels 110 wenigstens ein Probenstück aus der betreffenden Probenkarte ausgestanzt werden kann.

Die Funktion des modularen Stanzmittels 110, das aufgrund seines eigenständigen Aufbaus in einfacher Weise von der Stanzvorrichtung 10 getrennt werden kann, wird im Rahmen dieser Anmeldung nur teilweise beschrieben. Für Details zur Ausgestaltung des modularen Stanzmittels (Stanzkopfs) 110 wird auf die von der Anmelderin zeitgleich eingereichte Anmeldung mit dem Titel "Stanzvorrichtung mit modularem Stanzmittel" verwiesen, deren Inhalt zur Ausgestaltung des Stanzmittels durch Bezugnahme hier aufgenommen wird.

Die Funktion der Greifeinheit 300 wird im Rahmen dieser Anmeldung ebenfalls nur teilweise beschrieben werden. Für Details zur Ausgestaltung der Greifeinheit und ihrem Zusammenwirken mit der Stanzvorrichtung bzw. dem Stanzmittel der vorliegenden Anmeldung wird auf die von der Anmelderin zeitgleich eingereichte Anmeldung mit dem Titel "Stanzvorrichtung mit Greifeinheit" verwiesen, deren Inhalt zur Ausgestaltung der Greifeinheit durch Bezugnahme hier aufgenommen wird.

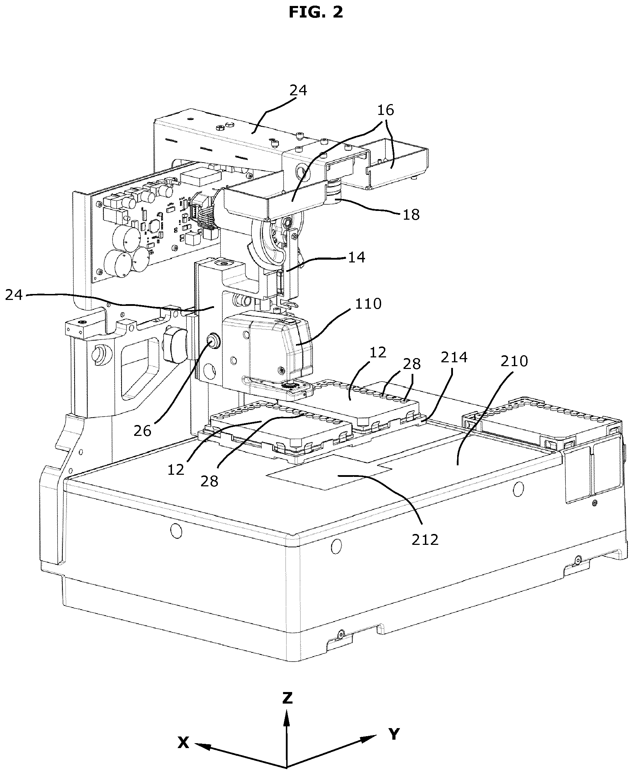

Aus der Übersichtsdarstellung der Fig. 2 ist auch ersichtlich, dass die Bildaufnahmevorrichtung 18 im Wesentlichen vertikal oberhalb eines beleuchteten Bereichs 212 der Aufnahmeplatte 210 angeordnet ist. Dieser beleuchtete Bereich 212 wird bevorzugt durch eine in der Aufnahmeplatte aufgenommene bzw. auf deren Rückseite angeordnete Elektrolumineszenzfolie gebildet. Eine darauf angeordnete Mikrotiterplatte 12 kann von der EL-Folie 212 hinterleuchtet werden, so dass mittels der Bildaufnahmevorrichtung 18 ein Bild der hinterleuchteten Mikrotiterplatte 12 bzw. eines Teils von ihr erfasst werden kann. Die Mikrotiterplatte(n) 12 ist/sind auf der Aufnahmeplatte 210 in einem Transportrahmen 214 aufgenommen, der über hier nicht dargestellte Magneten mit einer unter der Aufnahmeplatte 210 befindlichen Antriebseinheit gekoppelt ist und mittels dieser Antriebseinheit auf der Aufnahmeplatte 210 relativ zum feststehenden Stanzmittel 110 bewegt werden kann. Hierdurch kann eine bestimmte Aufnahmevertiefung 28 eines Aufnahmebehälters 12 genau unterhalb des Stanzmittels 110 angeordnet werden, so dass ein ausgestanztes Probenstück in diese Aufnahmevertiefung hinfällt bzw. in dieser aufgenommen wird. Beidseitig der Bildaufnahmevorrichtung 18 sind Halterungen 16 vorgesehen für alternative Beleuchtungsmittel, welche einen unter der Bildaufnahmeeinrichtung 18 positionierten Gegenstand, vorzugsweise eine Probenkarte, von oben beleuchten, so dass bildverarbeitende Prozesse für die Probenkarte durchgeführt werden können, beispielsweise Erkennung eines Barcodes und dergleichen.

Fig.3 zeigt in den Teilfiguren a) und b) ein Beispiel einer Probenkarte 22. Die Pro benkarte weist eine Art Öffnung 30 auf, in welcher ein saugfähiges Material 32, wie etwa eine Art Filterpapier oder dergleichen sichtbar ist. Auf dem saugfähigen Material ist wenigstens ein Probenbereich ausgewiesen, im vorliegenden Beispiel sind es vier solche Probenbereiche 34-1 bis 34-4, die als gestrichelte Kreise dargestellt sind. Wenn Proben, wie etwa Blut, Speichel oder aber auch andere Flüssigkeiten mittels der Probenkarte 22 gesammelt werden, sollen die Flüssigkeitsproben nach Möglichkeit innerhalb der markierten Probenbereiche 34-1 bis 34-4 abgegeben werden. Im vorliegenden Beispiel sind unterschiedlich große Proben 36-1 bis 36-4, beispielsweise Bluttropfen oder Speichelproben, in die entsprechenden Probenbereiche 34-1bis 34-4 abgegeben worden. Die Probe 36-4 liegt dabei nicht vollständig innerhalb der Markierung von Probenbereich 34-4, so dass diese Probe von einem Probengeber bzw. von medizinischem Personal entsprechend mit einem Kreuz 38 oberhalb des Probenbereichs 34-4 als ungültig gekennzeichnet worden ist. Unterhalb des saugfähigen Materials 32 ist auf der Karte noch eine Kodierung (Barcode, 2D-Barcode oder dergleichen) 40 vorgesehen, um eine Identifikation der Probenkarte und eine Zuordnung zu einem Probengeber, einem erfassenden Institut oder dergleichen zu ermöglichen. Auf der Probenkarte 22 können noch weitere Informationen enthalten bzw. aufgedruckt sein, wie etwa Herstellerangaben, Angaben zum Zweck der Karte oder zur Probenflüssigkeit etc. Die in flüssiger Form aufgebrachten Proben 36-1 bis 36-4 werden vom saugfähigen Material 32 aufgenommen und trocknen anschließend. Nach dem Trocknen können aus den Proben 36-1 bis 36-4 Probenstücke ausgestanzt werden mittels des Stanzmittels 110. Die Probenkarte 22 nach dem Ausstanzen von mehreren Probenstücken aus den Proben 36-1 bis 36-3 ist in der Fig. 3b durch die weisen Stanzlöcher 42 angedeutet. Wo und in welcher Reihenfolge das Ausstanzen von Probenstücken erfolgt kann beispielsweise mittels Bildverarbeitung festgelegt werden, wobei zum einen erkannt werden kann, ob eine Probe innerhalb des markierten Probenbereichs 34-1 bis 34-4 liegt (z.B. unter Verwendung des Kreuzes 38), wo die Probe 36-1 bis 36-4 innerhalb des Probenbereichs 34-1 bis 34-4 liegt und welche Begrenzung sie aufweist, was bei der Probe 36-1 durch die gestrichelte Linie 44 angedeutet ist. Auf Grundlage solcher Informationen und der gewünschten Anzahl auszustanzender Probenstücke kann dann ermittelt werden, wo Probenstücke ausgestanzt werden sollen. Dementsprechend kann die Probenkarte 22 dann relativ zum Stanzmittel positioniert werden, so dass die Probenstücke an den vorbestimmten Stellen ausgestanzt werden können. Die hier dargestellte Form der Probenkarte ist rein beispielhaft, die Proben karte kann ein anderes Format aufweisen, mehr oder weniger, kleinere oder größere Probenbereiche 34 aufweisen etc.

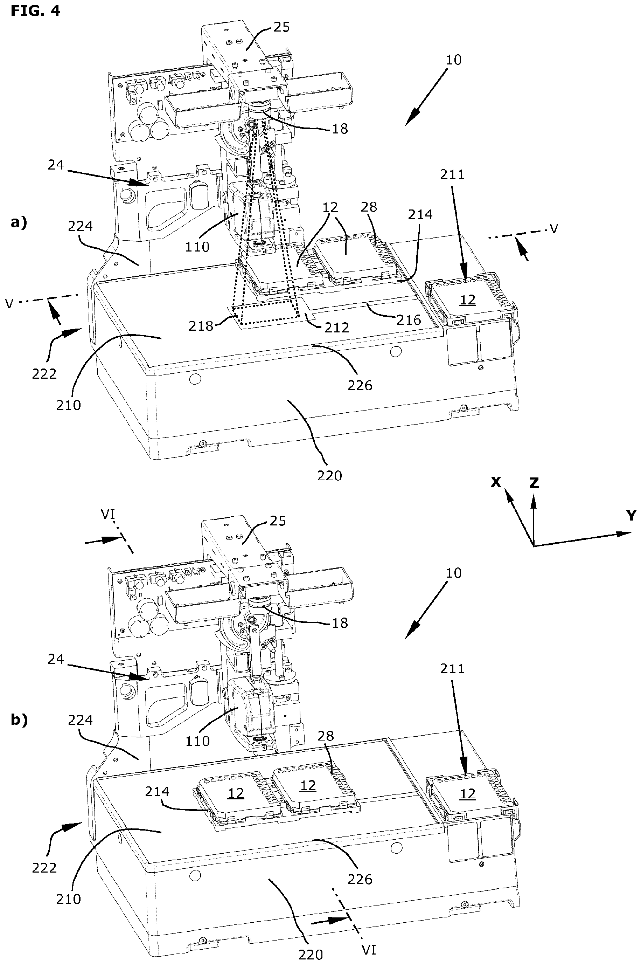

Fig. 4 zeigt in den Teilfiguren a) und b) die Stanzvorrichtung 10 mit dem auf der Aufnahmeplatte 210 angeordneten und beweglichen Transportrahmen 214, auf dem beispielhaft zwei Aufnahmebehälter 12 angeordnet sind. In Fig. 4a) befindet sich der Transportrahmen in einer Position, in welcher er nicht auf der Lichtquelle 212 angeordnet ist. In Fig. 4b) ist der Transportrahmen über der Lichtquelle 212 positioniert, so dass die Aufnahmebehälter 12 von der Lichtquelle 212 von unten angestrahlt werden können. Die Lichtquelle 212, die vorzugsweise als Elektrolumineszenzfolie ausgeführt ist, liegt wenigstens teilweise im durch gestrichelte Linien angedeuteten Sichtfeld 218 der Bildaufnahmevorrichtung 18, die im Wesentlichen vertikal oberhalb der Lichtquelle 212 angeordnet ist. Die Bildaufnahmevorrichtung 18 ist am Träger 25 der Tragkonstruktion 24 der Stanzvorrichtung 10 in X-Richtung derart angeordnet, dass das Sichtfeld 218 nicht durch das unterhalb angeordnete Stanzmittel 110 beeinträchtigt wird. Die EL-Folie 212 ist über eine Anschlussverbindung 216 mit einer zugehörigen nicht dargestellten Energiequelle und Steuerung, wie etwa einem Inverter oder dergleichen verbunden. Bei 211 ist eine Warte- oder Transferposition neben der Aufnahmeplatte 210 vorgesehen, an der ein oder mehrere Aufnahmebehälter 12 vor oder nach dem Stanzen zwischenzeitlich gelagert werden können.

Die Aufnahmeplatte 210 ist bevorzugt aus einem transparenten und insbesondere verschleißfesten Material hergestellt, wie etwa aus Glas oder einem dafür geeigneten Kunststoff. Die Aufnahmeplatte 210, auf welcher der Transportrahmen 214 gleitend verschoben werden kann, ist gleichzeitig auch die Abdeckung eines kastenartigen Gehäuses 220, an deren bezogen auf die Blickrichtung der Fig. 4 hinteren Seite 222 ein Träger 224 der Tragstruktur 24 der Stanzvorrichtung 10 angebracht ist. Die Aufnahmeplatte 210 weist einen umlaufenden sie abstützenden Plattenrand 226 auf. Innerhalb dieser Begrenzung 226 kann der Transportrahmen 214 mittels einer im Gehäuse 220 untergebrachten, in Fig. 4 nicht sichtbaren Antriebseinheit 230 an jede beliebige Position auf der Aufnahmeplatte 210 verschoben werden.

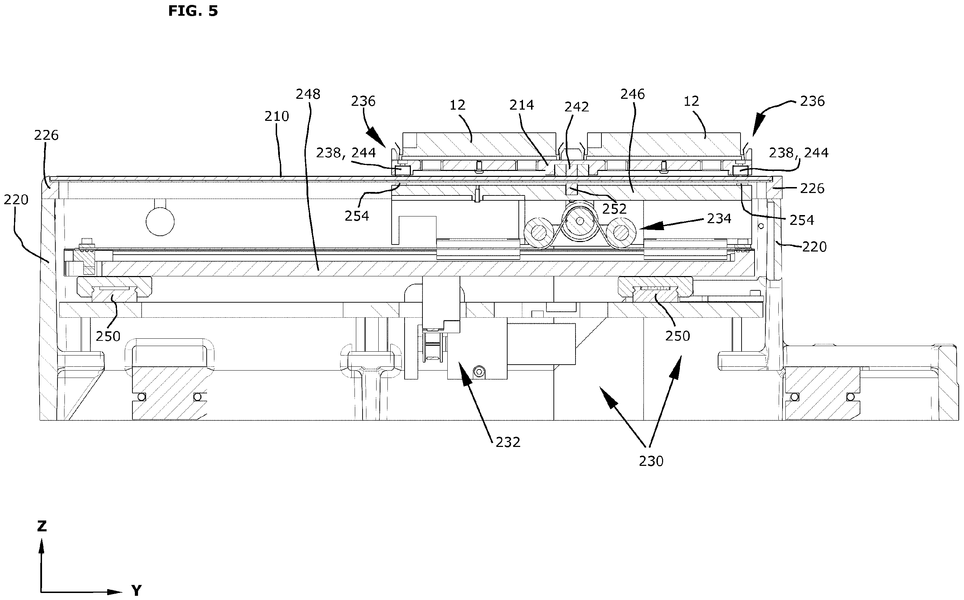

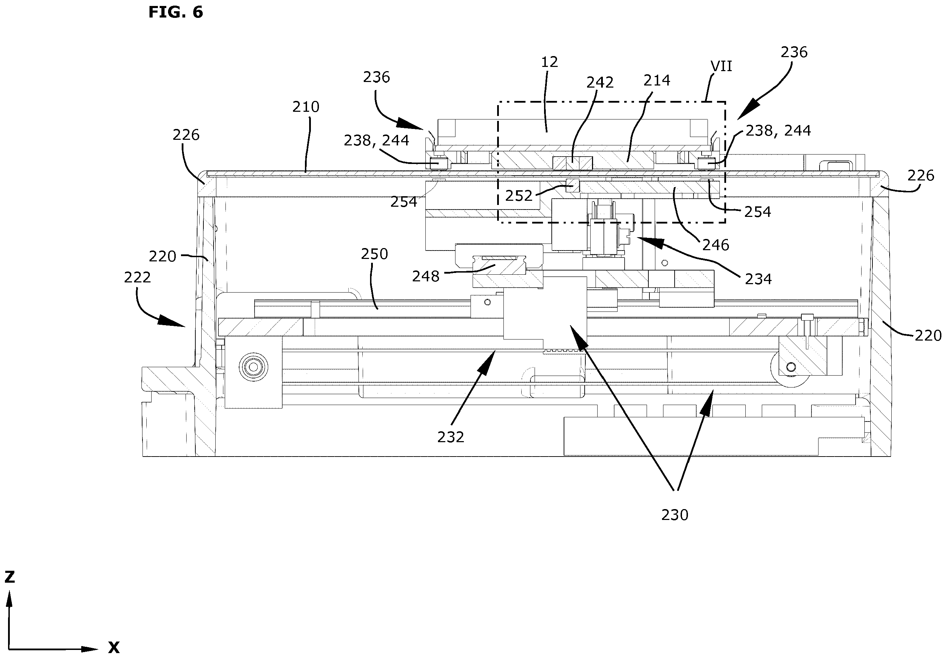

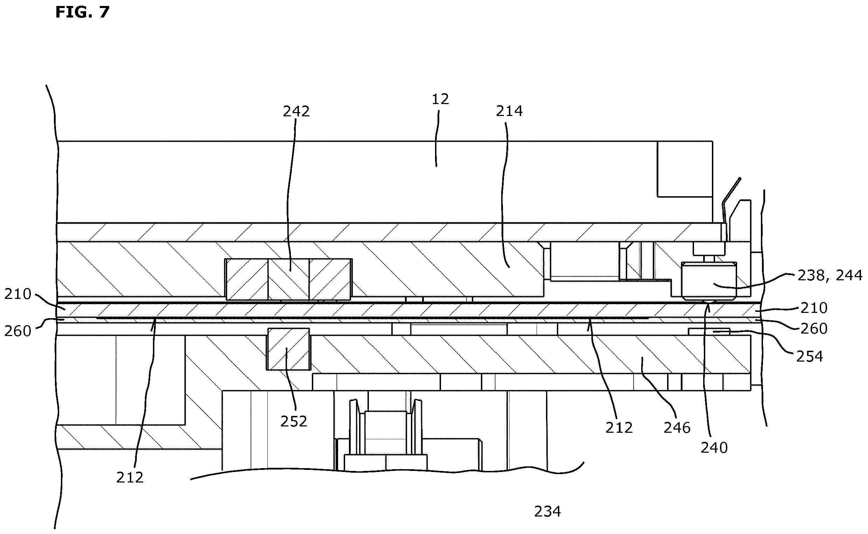

Die Antriebseinheit 230 wird nachfolgend unter Bezugnahme auf die Schnittdarstellungen der Fig. 5 bis 7 beschrieben. Die Antriebseinheit 230 umfasst zwei gesonderte Antriebe 232, 234, welche für eine Bewegung des Transportrahmens 214 in X- Richtung (Antrieb 232) und Y-Richtung (Antrieb 234) eingerichtet sind. Der Transportrahmen 214 weist in seinen Eckbereichen 236 Stützfüße 238 auf, die ein daran angeordnetes kugelförmiges bzw. kalottenförmiges Gleitelement 240 aufweisen, das auf der Aufnahmeplatte 210 aufliegt (Fig. 7). Die Form der Gleitelemente 240 ermöglicht eine punktuelle Auflage des Transportrahmens 214 in seinen vier Ecken 236 auf der Aufnahmeplatte 210, so dass der Reibungswiderstand zwischen Transportrahmen 214 und Aufnahmeplatte 210 möglichst gering gehalten werden kann. In einem zentralen Bereich des Transportrahmens 214 ist ein Kopplungsmagnet 242 ersichtlich, der in geringem Abstand oberhalb der Aufnahmeplatte 210 angeordnet ist. Auch im Bereich der Stützfüße 238 können weitere Kopplungsmagnete 244 vorgesehen sein, vorzugsweise dienen die Stützfüße 238 oder/und die Gleitelemente 240 selbst als Kopplungsmagnete 244.

Unterhalb der Aufnahmeplatte 210 ist innerhalb des Gehäuses 220 der Antriebseinheit 230 ein der Unterseite des Transportrahmens 214 gegenüberliegender Antriebsrahmen 246 vorgesehen, der auf einem schienenartigen Träger 248 abgestützt ist und mittels des Antriebs 234 entlang dieses Trägers 248 in Y-Richtung bewegt werden kann. Der Antriebsrahmen 246 weist an seiner Oberseite mehrere Kopplungsmagneten 252, 254 auf, die derart angeordnet sind, dass sie mit den Kopplungsmagneten 242, 244 des Transportrahmens 214 in Wirkverbindung stehen, so dass zwischen dem Antriebsrahmen 246 und dem Transportrahmen durch die Aufnahmeplatte 210 hindurch eine magnetische Kopplung ermöglicht wird. Aufgrund dieser berührungslosen, magnetischen Kopplung zwischen Antriebsrahmen 246 und Transportrahmen 214 folgt der auf der Aufnahmeplatte 210 aufliegende Transportrahmen 214 der bzw. den Bewegungen des Antriebsrahmens 246 unterhalb der Aufnahmeplatte 210.

Der schienenartige Träger 248 ist seinerseits auf zu ihm orthogonal angeordneten Gleitschienen 250 abgestützt und mit dem Antrieb 232 verbunden, so dass der Träger 248 mittels des Antriebs 234 entlang den Gleitschienen 250 in X-Richtung bewegt werden kann. Somit kann der Antrieb 232 für die Y-Richtung aufgrund seiner Kopplung mit dem in X-Richtung beweglichen Träger 248 ebenfalls in X-Richtung bewegt werden, so dass der Antriebsrahmen 246 auch überlagerte Bewegungen in beide Richtungen X und Y durchführen kann. Für die Antriebe 232 und 234 sind hier beispielhaft Riemenantriebe dargestellt. Es können aber auch andere Antriebe in Frage kommen, wie etwa Spindelantrieb, Linearmotor oder dergleichen. Die Antriebseinheit 230 mit den Antrieben 232 und 234 ist durch das Gehäuse 220 und die Aufnahmeplatte 210 nach außen hin geschützt und eine Eindringen von Staubpartikeln, die beim Stanzen entstehen und die in der Regel nicht vollständig durch eine am Stanzmittel 110 (Fig. 4) vorgesehene Absaugeinrichtung entfernt werden können, kann verhindert werden.

Aus der vergrößerten Schnittdarstellung der Fig. 7 ist ferner die an der Unterseite der Aufnahmeplatte 210 angebrachte Lichtquelle 212 in der bevorzugten Form einer Elektrolumineszenzfolie 212 ersichtlich. Im Übrigen weist die Aufnahmeplatte 210 auf Ihrer Unterseite ferner eine weitere Platte oder Beschichtung 260 auf, wobei die EL-Folie 212 vorzugsweise zwischen der Aufnahmeplatte 210 und dieser Platte/Beschichtung 260 aufgenommen ist. Die Aufnahmeplatte 210 ist bevorzugt transparent ausgeführt, und die Platte/Beschichtung 260 kann aus einem nicht transparenten oder opaken Material hergestellt sein, damit ein Einblick in das Gehäuse 220 auf die Antriebseinheit 230 nicht möglich ist. Hierdurch kann für die Bilderfassungsvorrichtung 18 ein neutraler Hintergrund geschaffen werden über die gesamte Fläche der Aufnahmeplatte 210. Alternativ kann die Platte/Beschichtung 260 aber auch transparent sein. Wird die EL-Folie 212 zum Leuchten gebracht strahlt ihr Licht durch die Aufnahmeplatte 210 hindurch nach oben (Z-Richtung), so dass ein über ihr angeordneter Gegenstand, wie etwa ein im Transportrahmen 214 befindlicher Aufnahmebehälter 12 oder eine von der Greifeinheit 300 (Fig. 1) gehaltene Probenkarte 22 (Fig. 3) von unten angestrahlt wird.

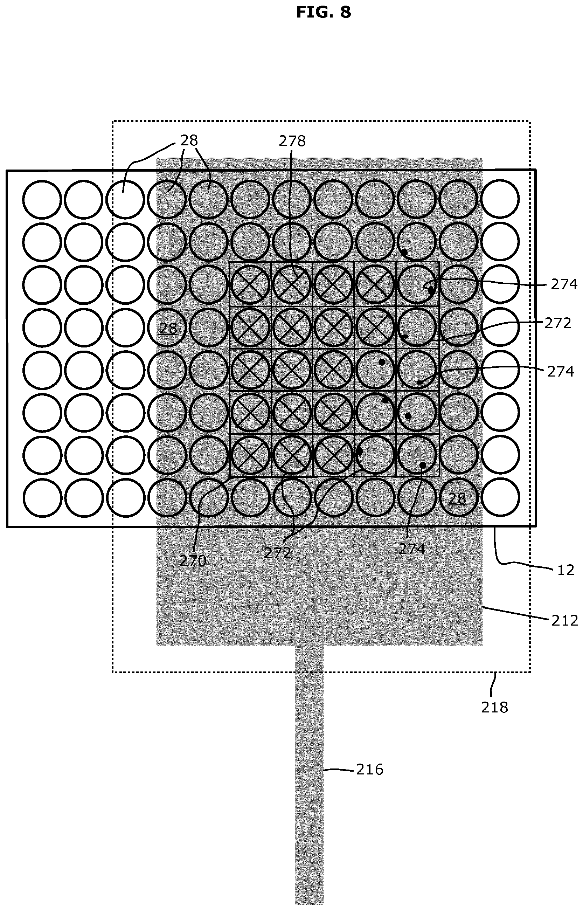

Diese Beleuchtung von unten, die auch als Hinterleuchten bezeichnet wird, ist sehr vereinfacht und schematisch in der Fig. 8 dargestellt. Fig. 8 zeigt eine Draufsicht auf den Aufnahmebehälter 12 mit seinen Aufnahmevertiefungen 28. Es kann sich dabei um eine Mikrotiterplatte 12 mit ihren Näpfen/Wells 28 handeln. Der Aufnahmebehälter 12 ist wenigstens teilweise über der EL-Folie 212, die hier grau dargestellt ist, angeordnet. Die Aufnahmevertiefungen 28 des vorzugsweise transparenten Aufnahmebehälters 12 werden von der EL-Folie 212 von unten beleuchtet, so dass ihr Licht durch die Aufnahmevertiefungen 28 hindurch tritt. Mittels der Bilderfassungsvorrichtung 18 (Fig. 4) kann innerhalb ihres Sichtfelds 218 ein Bild des Aufnahmebehälters 12 oder wenigstens eines Teils von diesem aufgenommen werden. Durch Bildverarbeitung können beispielsweise in einem beispielsweise von der Bildverarbeitungssoftware oder benutzerseitig festgelegten Analysebereich 270 die Umrisse 272 der Aufnahmevertiefungen 28 detektiert und deren Position bestimmt werden. Ferner können in den Aufnahmevertiefungen 28 enthaltene, aus Probenkarten ausgestanzte Probenstücke 274 detektiert werden, die aufgrund der Hinterleuchtung durch die die EL-Folie 212 als dunkle punktartige Bereiche erscheinen. Durch die Bildverarbeitung kann ferner eine Zuordnung von Probenstücken 274 zu bestimmten Aufnahmevertiefungen 28 ermittelt bzw. überprüft werden. Durch Einbeziehung von Daten über die Positionierung des Aufnahmebehälters 12 relativ zur feststehenden Bildaufnahmevorrichtung 18 ist es möglich zu bestimmen, welche Aufnahmevertiefungen 28 des Aufnahmebehälters 12 sich im Analysebereich 270 befinden sollten. Auf einem mit der Steuervorrichtung der Stanzvorrichtung 10 verbundenen Monitor kann beispielsweise ein von der Bildaufnahmevorrichtung 18 erfassten Bild samt dem Analysebereich 270 angezeigt werden. In dieser Anzeige können dann beispielsweise erkannte, aber noch leere Aufnahmevertiefungen 28 mit einem Kreuz 278 markiert und visualisiert werden.

Natürlich kann durch die Bildaufnahmevorrichtung und die Bildverarbeitung auch das Vorhandensein von Stanzlöchern 42 (Fig. 3) in einer Probenkarte 22 überprüft werden, wobei hierzu die Probenkarte ebenfalls von der EL-Folie 212 von unten beleuchtet wird. Ausgestanzte Löcher erscheinen dann in einem von der Bilderfassungsvorrichtung aufgenommenen Bild als punktartige Bereiche in der Farbe des von der EL-Folie 212 ausgestrahlten Lichts. Aus einer Kombination der Fig. 8 und 3b würde dies bedeuten, dass die in der Fig. 3b weiß dargestellten Stanzlöcher 42 in der Fig. 8 grau dargestellt wären, wenn die Probenkarte mittels der Greifeinheit 300 über der EL-Folie 212 positioniert ist.

Das Einbetten einer EL-Folie 212 in der Aufnahmeplatte 210 ermöglicht also die Durchführung von unterschiedlichen analysierenden Verfahrensschritten, um feststellen zu können, ob beim Ausstanzen von Probenstücken aus den Probenkarten und beim Einführen dieser Probenstücke in eine bestimmte Aufnahmevertiefung alles korrekt abgelaufen ist. Das Verschieben des Aufnahmebehälters 12 von einer Position unterhalb des Stanzmittels 110 zu einer Position auf der EL-Folie 212 und unterhalb der Bildaufnahmevorrichtung 18 kann beispielsweise in der Zeit erfolgen, wenn eine eben gestanzte Probenkarte durch die Greifeinheit 300 wieder zu einem Magazin transportiert und dort abgelegt wird. Somit kann die Zeitdauer während der ein Transport einer gestanzten Probenkarte weg vom Stanzmittel zu einem Magazin und ein Transport einer neuen Probenkarte aus einem Magazin zum Stanzmittel hin durchgeführt wird, dafür genutzt werden, gleichzeitig eine Überprüfung durchzuführen, ob das eben ausgestanzte Probenstück in der richtigen (vorbestimmten) Aufnahmevertiefung angekommen ist. Sofern in einer Aufnahmevertiefung, in der ein Probenstück enthalten sein sollte, kein solches detektiert werden kann, ist es möglich eine Fehlermeldung auszugeben und den automatisierten Prozess anzuhalten. Solche Analysemöglichkeiten und -schritte erhöhen die Sicherheit bei der korrekten Zuordnung von aus Probenkarten ausgestanzten Probenstücken zu den Aufnahmevertiefungen in den Aufnahmebehältern. Hierdurch wird das Risiko minimiert, dass Ergebnisse einer automatisiert durchgeführten Analyse eines Probenstücks einer falschen Person als Probengeber zugeordnet werden. Die hier erwähnten Analyseschritte stellen Beispiele dar und sind nicht einschränkend zu verstehen. Es ist klar, dass durch Kombination von Daten aus unterschiedlichen Quellen, wie etwa Bildern, Positionsgebern und dergleichen, die durch eine Steuereinheit der Stanzvorrichtung 10 und ggf. der Dosiervorrichtung 500 erfasst werden können, weitere Informationen gewonnen werden können, um ein automatisiertes Stanzverfahren durchführen zu können.

## Patentansprüche

1. Stanzvorrichtung zum Verarbeiten von auf einer Probenkarte (22) aufgetragenen, insbesondere getrockneten Proben (36-1,...,36-4), vorzugsweise von DNA enthaltenden Flüssigkeiten wie Blut, Speichel und dergleichen, umfassend
wenigstens ein Stanzmittel (110) mit einem Stempel und einem Unterwerkzeug, wobei der Stempel zwischen einer vom Unterwerkzeug entfernten Ruhestellung und einer dem Unterwerkzeug angenäherten Stanzstellung beweglich ist, und wobei das Stanzmittel (110) eine Aufnahmeöffnung aufweist, in welche eine Probenkarte (22) mittels einer beweglichen Greifeinheit (300) der Stanzvorrichtung (10) einführbar und relativ zum Stanzmittel (110) positionierbar ist,
und einen mit dem Stempel des Stanzmittels (110) koppelbaren oder gekoppelten Stanzantrieb (14), durch den die Bewegung des Stempels zwischen Ruhestellung und Stanzstellung angetrieben wird, wobei das Stanzmittel (110) derart eingerichtet ist, dass ein aus der Probenkarte (22) ausgestanztes Probenstück (274) an einer Austrittsöffnung des Unterwerkzeugs in eine Aufnahmevertiefung (28) eines unterhalb des Stanzmittels (110) angeordneten Aufnahmebehälters (12) abgegeben werden kann, wobei sie eine Aufnahmebehälter (12) abstützende Aufnahmeplatte (210) aufweist, **dadurch gekennzeichnet, dass** sie ferner eine wenigstens einen Teil der Aufnahmeplatte (210) beleuchtende Lichtquelle (212) aufweist, wobei die Lichtquelle (212) derart angeordnet ist, dass wenigstens ein Teil eines auf der Aufnahmeplatte (210) befindlichen Aufnahmebehälters (12), insbesondere von in ihm vorgesehenen Aufnahmevertiefungen (28), aus Richtung der Aufnahmeplatte (210) von unten beleuchtet werden kann,
dass die Greifeinheit (300) dazu eingerichtet ist, eine Probenkarte (22) über der Lichtquelle (212) zu halten, und
dass die Stanzvorrichtung ferner eine Bilderfassungsvorrichtung (18) umfasst, die derart angeordnet ist, dass ein auf der Aufnahmeplatte (210) befindlicher Aufnahmebehälter (12) oder eine durch die Greifeinheit (300) gehaltene Probenkarte (22), zwischen der Bildebene der Bilderfassungsvorrichtung (18) und der Lichtquelle (212) angeordnet werden kann, derart, dass die Lichtquelle (212) von der Bildebene aus gesehen hinter dem zu erfassenden Aufnahmebehälter (12) oder der Probenkarte (22) liegt,
wobei eine der Bilderfassungsvorrichtung (18) zugeordnete Bildverarbeitungssoftware dazu eingerichtet ist, auf Basis eine erfassten Bildes des Aufnahmebehälters (12) oder/und eines erfassten Bildes der Probenkarte eine korrekte Durchführung eines Stanzvorgangs festzustellen.

2. Stanzvorrichtung nach Anspruch 1, **dadurch gekennzeichnet, dass** als Lichtquelle wenigstens eine Elektrolumineszenz-Folie (212) an der Aufnahmeplatte (210) vorgesehen ist.

3. Stanzvorrichtung nach Anspruch 2, **dadurch gekennzeichnet, dass** die Aufnahmeplatte (210) eine transparente Platte, vorzugsweise Glasplatte ist, wobei die EL-Folie (212) vorzugsweise an der Unterseite der Aufnahmeplatte (210) angeordnet ist.

4. Stanzvorrichtung nach einem der vorhergehenden Ansprüche, **dadurch gekennzeichnet, dass** sie einen auf der Aufnahmeplatte (210) aufliegenden, in der Plattenebene beweglichen Transportrahmen (214) aufweist, in welchem wenigstens ein Aufnahmebehälter (12) aufnehmbar ist.

5. Stanzvorrichtung nach Anspruch 4, **dadurch gekennzeichnet, dass** die Aufnahmeplatte (210) eine Abdeckung eines Gehäuses (220) für eine Antriebseinheit (230) bildet, welche die Bewegung des Transportrahmens (214) auf der Aufnahmeplatte (210) ermöglicht.

6. Stanzvorrichtung nach Anspruch 5, **dadurch gekennzeichnet, dass** der Transportrahmen (214) berührungslos mittels Magneten (242, 244, 252, 254) mit der durch die Aufnahmeplatte (210) abgedeckten Antriebseinheit (230) gekoppelt ist.

7. Stanzvorrichtung nach einem der vorhergehenden Ansprüche, **dadurch gekennzeichnet, dass** die Greifeinheit (300) ein Probenkartengreifmittel und ein weiteres Greifmittel für Aufnahmebehälter (12) umfasst, wobei mittels der Greifeinheit (300) Aufnahmebehälter (12) von Wartepositionen (211) außerhalb der Aufnahmeplatte (210) zu Verarbeitungspositionen auf der Aufnahmeplatte (210) und umgekehrt transportierbar sind.

8. Stanzvorrichtung nach Anspruch 4 und 7, **dadurch gekennzeichnet, dass** die Greifeinheit (300) derart ausgeführt ist, dass Aufnahmebehälter (12) mittels der Greifeinheit (300) zum Transportrahmen (214) hin und von diesem weg bewegt werden können.

9. Verfahren zum Auswerten von wenigstens einem Ergebnis eines Stanzvorgangs mittels einer Stanzvorrichtung (10) nach einem der vorhergehenden Ansprüche, umfassend die Schritte:
Ausstanzen von wenigstens einem Probenstück (274) aus wenigstens einer Probenkarte (22) mittels eines Stanzmittels (110),
Aufnehmen des wenigstens einen Probenstücks (274) in einem Aufnahmebehälter (12), insbesondere in einer Aufnahmevertiefung (28) des Aufnahmebehälters (12),
Beleuchten des Aufnahmebehälters (12) oder der gestanzten Probenkarte (22) mittels einer Lichtquelle (212),
Erfassen eines Bildes des Aufnahmebehälters (12) oder der gestanzten Probenkarte (22) mittels einer Bilderfassungsvorrichtung (18), wobei der Aufnahmebehälter (12) oder die gestanzte Probenkarte (22) zwischen der Lichtquelle (212) und einer Bilderfassungsebene der Bildaufnahmevorrichtung (18) angeordnet wird, derart, dass Licht von der Lichtquelle (212), das die Bilderfassungsvorrichtung (18) erreicht, durch durchscheinende Abschnitte des Aufnahmebehälters (12) oder durch ausgestanzte Öffnungen (42) der Probenkarte (22) hindurchtritt.

10. Verfahren nach Anspruch 9, wobei ein von der Bilderfassungsvorrichtung (18) erfasstes Bild dahingehend ausgewertet wird, an welchen Stellen des Bildes Licht von der Lichtquelle (212) hindurchtritt oder abgedeckt wird.

11. Verfahren nach Anspruch 9 oder 10, wobei in einem Bild des Aufnahmebehälters (12) ausgewertet wird, ob in wenigstens einer Aufnahmevertiefung (28) des Aufnahmebehälters (12) wenigstens ein aus einer Probenkarte (22) ausgestanztes Probenstück (274) enthalten ist, welches das Hindurchtreten von Licht der Lichtquelle (212) wenigstens teilweise verhindert.

12. Verfahren nach einem der Ansprüche 9 bis 11, wobei in einem Bild der Probenkarte (22) ausgewertet wird, an welchen Stellen der Probenkarte (22) ausgestanzte Öffnungen (42) vorhanden sind.

13. Verfahren nach einem der Ansprüche 9 bis 12, wobei die Lichtquelle (212) Licht im sichtbaren Wellenbereich ausstrahlt, insbesondere mit einer Wellenlänge, die einer gewünschten Farbe, wie etwa blau, grün, rot oder dergleichen entspricht.

14. Verfahren nach einem der Ansprüche 9 bis 13, wobei das Ergebnis einer Auswertung eines erfassten Bildes mit bereits bekannten Vergleichswerten verglichen wird, um den korrekten Verlauf des Stanzvorgangs zu überprüfen, wobei vorzugsweise überprüft wird, ob ein zuvor ausgestanztes Probenstück (274) in einer vorbestimmten Aufnahmevertiefung (28) enthalten ist oder/und vorzugsweise bestimmt wird, ob das Ausstanzen an einer zuvor bestimmten Stelle der Probenkarte (22) erfolgt ist.

## Claims

1. A punching device for processing in particular dried samples (36-1,...,36-4) applied to a sample card (22), preferably of liquids containing DNA such as blood, saliva and the like, comprising
at least one punching means (110) having a punch and a lower die, wherein the punch is movable between a rest position in which it is away from the lower die and a punching position in which it is close to the lower die, and wherein the punching means (110) has a receiving opening into which a sample card (22) is introducible by means of a movable gripper unit (300) of the punching device (10) and is positionable relative to the punching means (110),
and a punching drive (14) which is couplable or coupled to the punch of the punching means (110) and by way of which the movement of the punch between the rest position and the punching position is driven, wherein the punching means (110) is set up such that a sample piece (274) punched out of the sample card (22) can be dispensed at an outlet opening of the lower die into a receiving recess (28) in a receiving container (12) arranged beneath the punching means (110),
wherein it has a receiving plate (210) supporting a receiving container (12),
**characterized in that** it further has a light source (212) illuminating at least a part of the receiving plate (210), wherein the light source (212) is arranged such that at least a part of a receiving container (12) located on the receiving plate (210), in particular receiving recesses (28) provided in said receiving container (12), can be illuminated from the direction of the receiving plate (210) from below,
that the gripper unit (300) is set up to hold a sample card (22) above the light source (212), and
that the punching device furthermore comprises an image capturing device (18) which is arranged such that a receiving container (12) located on the receiving plate (210), or a sample card (22) held by the gripper unit (300), can be arranged between the image plane of the image capturing device (18) and the light source (212) such that the light source (212) is located behind the receiving container (12) to be captured or the sample card (22), as seen from the image capturing plane,
wherein an image processing software assigned to the image capturing device (18) is set up to check the correct progress of a punching operation on the basis of a captured image of the receiving container (12) or/and a captured image of the sample card.

2. The punching device as claimed in claim 1, **characterized in that** at least one electroluminescent film (212) is provided as light source on the receiving plate (210).

3. The punching device as claimed in claim 2, **characterized in that** the receiving plate (210) is a transparent plate, preferably a glass plate, wherein the EL film (212) is arranged preferably on the underside of the receiving plate (210).

4. The punching device as claimed in one of the preceding claims, **characterized in that** it has a transport frame (214) resting on the receiving plate (210) and able to move in the plate plane, at least one receiving container (12) being receivable in said transport frame (214).

5. The punching device as claimed in claim 4, **characterized in that** the receiving plate (210) forms a cover of a housing (220) for a drive unit (230) which enables the movement of the transport frame (214) on the receiving plate (210).

6. The punching device as claimed in claim 5, **characterized in that** the transport frame (214) is coupled in a contactless manner by means of magnets (242, 244, 252, 254) to the drive unit (230) covered by the receiving plate (210).

7. The punching device as claimed in one of the preceding claims, **characterized in that** the gripper unit (300) comprises a sample card gripper means and a further gripper means for receiving containers (12), wherein receiving containers (12) are transportable by means of the gripper unit (300) from waiting positions (211) outside the receiving plate (210) to processing positions on the receiving plate (210) and vice versa.

8. The punching device as claimed in claims 4 and 7, **characterized in that** the gripper unit (300) is configured such that receiving containers (12) can be moved toward and away from the transport frame (214) by means of the gripper unit (300).

9. A method for evaluating at least one result of a punching operation by means of a punching device (10) as claimed in one of the preceding claims, comprising the steps of:
punching at least one sample piece (274) out of at least one sample card (22) by means of a punching means (110),
receiving the at least one sample piece (274) in a receiving container (12), in particular in a receiving recess (28) of the receiving container (12),
illuminating the receiving container (12) or the punched sample card (22) by means of a light source (212),
capturing an image of the receiving container (12) or of the punched sample card (22) by means of an image capturing device (18), wherein the receiving container (12) or the punched sample card (22) is arranged between the light source (212) and an image capturing plane of the image capturing device (18) such that light from the light source (212) which reaches the image capturing device (18) passes through translucent portions of the receiving container (12) or through punched-out openings (42) of the sample card (22).

10. The method as claimed in claim 9, wherein an image captured by the image capturing device (18) is evaluated so as to establish at which points of the image light from the light source (212) passes through or is covered.

11. The method as claimed in claim 9 or 10, wherein an evaluation is made in an image of the receiving container (12) as to whether at least one receiving recess (28) of the receiving container (12) contains at least one sample piece (274) punched out of a sample card (22), said sample piece (274) at least partially preventing light from the light source (212) from passing through.

12. The method as claimed in one of claims 9 to 11, wherein an evaluation is made in an image of the sample card (22) as to at which points of the sample card (22) punched-out openings (42) are present.

13. The method as claimed in one of claims 9 to 12, wherein the light source (212) emits light in the visible wave range, in particular at a wavelength which corresponds to a desired color, for instance blue, green, red or the like.

14. The method as claimed in one of claims 9 to 13, wherein the result of an evaluation of a captured image is compared with already known comparative values in order to check the correct progress of the punching operation, a check preferably being made as to whether a previously punched-out sample piece (274) is contained in a predetermined receiving recess (28) or/and it preferably being determined whether the punching out has taken place at a previously determined point of the sample card (22).

## Revendications

1. Dispositif de découpage à la presse pour traiter des échantillons (36-1, ..., 36-4) en particulier séchés, appliqués sur une carte d'échantillons (22), de préférence des liquides tels que du sang, de la salive, etc. contenant un ADN ; comprenant :
au moins un moyen de découpage (110) avec un poinçon et un outil inférieur, le poinçon étant mobile entre une position de repos, éloignée de l'outil inférieur, et une position de découpage, rapprochée dudit outil inférieur, et le moyen de découpage (110) présentant une ouverture de réception dans laquelle une carte d'échantillons (22) est apte à être introduite à l'aide d'une unité de préhension mobile (300) du dispositif de découpage (10) et est apte à être positionnée par rapport au moyen de découpage (110),
et un entraînement de découpage (14) qui est apte à être accouplé ou qui est accouplé au poinçon du moyen de découpage (110) et grâce auquel le mouvement dudit poinçon entre la position de repos et la position de découpage est entraîné, le moyen de découpage (110) étant installé de telle sorte qu'un morceau d'échantillon (274) découpé dans la carte d'échantillons (22) puisse être déposé, au niveau d'une ouverture de sortie de l'outil inférieur, dans un creux de réception (28) d'un récipient de réception (12) disposé au-dessous du moyen de découpage (110), le dispositif de découpage à la presse comportant une plaque de réception (210) qui supporte des récipients de réception (12),
**caractérisé en ce qu'**il comporte également une source lumineuse (212) qui éclaire une partie au moins de la plaque de réception (210), la source lumineuse (212) étant disposée de telle sorte qu'une partie au moins d'un récipient de réception (12) qui se trouve sur la plaque de réception (210) puisse être éclairée, en particulier par des creux de réception (28) prévus dans ledit récipient (12), par-dessous à partir du sens de la plaque de réception (210),
**en ce que** l'unité de préhension (300) est installée pour tenir une carte d'échantillons (22) au-dessus de la source lumineuse (212), et
**en ce que** le dispositif de découpage à la presse comprend également un dispositif de prise de vues (18) qui est disposé de telle sorte qu'un récipient de réception (12) qui se trouve sur la plaque de réception (210) ou une carte d'échantillons (22) tenue par l'unité de préhension (300) puisse être disposé entre le plan d'image du dispositif de prise de vues (18) et la source lumineuse (212), de telle sorte que ladite source lumineuse (212), vue du plan d'image, se trouve derrière le récipient de réception (12) à capter ou la carte d'échantillons (22),
un logiciel de traitement d'image associé au dispositif de prise de vues (18) étant installé pour constater, sur la base d'une image captée du récipient de réception (12) ou/et d'une image captée de la carte d'échantillons, une réalisation correcte d'une opération de découpage.

2. Dispositif de découpage à la presse selon la revendication 1, **caractérisé en ce qu'**il est prévu comme source lumineuse au moins un film électroluminescent (212) sur la plaque de réception (210).

3. Dispositif de découpage à la presse selon la revendication 2, **caractérisé en ce que** la plaque de réception (210) est une plaque transparente (210), de préférence une plaque de verre, le film électroluminescent (212) étant disposé de préférence sur le côté inférieur de la plaque de réception (210).

4. Dispositif de découpage à la presse selon l'une des revendications précédentes, **caractérisé en ce qu'**il comporte un châssis de transport (214) qui est posé sur la plaque de réception (210), qui est mobile dans le plan de plaque et dans lequel au moins un récipient de réception (12) est apte à être reçu.

5. Dispositif de découpage à la presse selon la revendication 4, **caractérisé en ce que** la plaque de réception (210) forme un recouvrement d'un carter (220) pour une unité d'entraînement (230) qui permet le déplacement du châssis de transport (214) sur ladite plaque de réception (210).

6. Dispositif de découpage à la presse selon la revendication 5, **caractérisé en ce que** le châssis de transport (214) est accouplé sans contact, à l'aide d'aimants (242, 244, 252, 254), à l'unité d'entraînement (230) couverte par la plaque de réception (210).

7. Dispositif de découpage à la presse selon l'une des revendications précédentes, **caractérisé en ce que** l'unité de préhension (300) comprend un moyen de préhension de carte d'échantillons et un autre moyen de préhension pour les récipients de réception (12), les récipients de réception (12) étant aptes à être transportés à l'aide de l'unité de préhension (300) de positions d'attente (211) situées à l'extérieur de la plaque de réception (210) jusqu'à des positions de traitement sur la plaque de réception (210), et inversement.

8. Dispositif de découpage à la presse selon les revendications 4 et 7, **caractérisé en ce que** l'unité de préhension (300) est conçue de telle sorte que des récipients de réception (12) puissent être déplacés à l'aide de ladite unité de préhension (300) en direction du châssis de transport (214) et à l'opposé de celui-ci.

9. Procédé pour évaluer au moins un résultat d'une opération de découpage à l'aide d'un dispositif de découpage à la presse (10) selon l'une des revendications précédentes, comprenant les étapes suivantes :
le découpage dans au moins une carte d'échantillons (22), à l'aide d'un moyen de découpage (110), d'au moins un morceau d'échantillon (274),
la réception du ou des morceaux d'échantillon (274) dans un récipient de réception (12), en particulier dans un creux de réception (28) du récipient de réception (12),
l'éclairage du récipient de réception (12) ou de la carte d'échantillons (22) découpée, à l'aide d'une source lumineuse (212),
la captation d'une image du récipient de réception (12) ou de la carte d'échantillons (22) découpée, à l'aide d'un dispositif de prise de vues (18), le récipient de réception (12) ou la carte d'échantillons (22) découpée étant disposé entre la source lumineuse (212) et un plan de captation d'image du dispositif de prise de vues (18) de telle sorte que la lumière de la source lumineuse (212) qui atteint le dispositif de prise de vues (18) passe à travers des sections translucides du récipient de réception (12) ou des ouvertures découpées (42) de la carte d'échantillons (22) .

10. Procédé selon la revendication 9, selon lequel une image captée par le dispositif de prise de vues (18) est analysée pour savoir à quels endroits de l'image la lumière de la source lumineuse (212) passe ou est couverte.

11. Procédé selon la revendication 9 ou 10, selon lequel dans une image du récipient de réception (12) a lieu une analyse pour voir si dans au moins un creux de réception (28) du récipient de réception (12) est contenu au moins un morceau d'échantillon (274), découpé dans une carte d'échantillons (22), qui empêche au moins en partie le passage de la lumière de la source lumineuse (212).

12. Procédé selon l'une des revendications 9 à 11, selon lequel dans une image de la carte d'échantillons (22) est réalisée une analyse pour savoir à quels endroits de ladite carte (22) il y a des ouvertures découpées (42).

13. Procédé selon l'une des revendications 9 à 12, selon lequel la source lumineuse (212) émet de la lumière dans la gamme d'ondes visibles, en particulier avec une longueur d'ondes qui correspond à une couleur voulue, telle que le bleu, le vert, le rouge ou autre.

14. Procédé selon l'une des revendications 9 à 13, selon lequel le résultat d'une analyse d'une image captée est comparé à des valeurs comparatives déjà connues, afin de vérifier le déroulement correct de l'opération de découpage, étant précisé qu'on vérifie de préférence si un morceau d'échantillon (274) découpé précédemment est contenu dans un creux de réception (28) prédéfini ou/et on définit de préférence si le découpage a eu lieu à un endroit défini de la carte d'échantillons (22) défini au préalable.
